# EUROPEAN PATENT SPECIFICATION

(11) **EP 2 025 628 B1**
(45) Date of publication and mention of the grant of the patent: **06.07.2011**
(21) Application number: 08012917.4
(22) Date of filing: 17.07.2008
(51) Int. Cl.: B65G 47/84

(54) **Sorting device**
Sortiereinrichtung
Dispositif de tri

(30) Priority: 18.07.2007 NL 1034156
(43) Date of publication of application: 18.02.2009
(73) Proprietor: Vanderlande Industries B.V., 5466 RB Veghel (NL)
(72) Inventor: Vervoort, Petrus Theodorus Cornelis, 5248 AE Rosmalen (NL)
(74) Representative: Dorna, Peter

(56) References cited:
- GB-A- 2 057 381
- NL-A- 9 300 982

## Description

The present invention relates to a sorting device according to the preamble of claim 1.

Such a device is known from NL 9300982, which has been laid open to public inspection. More specifically, reference is made to figures 4-6 of said document and the associated description of said figures. Said document describes a sorting device In which use is made of pusher shoes, each provided with three guide wheels. The pusher shoes are supported by an associated elongated carrier extending transversely to the conveying direction and are movable along said carrier In the longitudinal direction thereof. The three guide wheels are rotatable about axes of rotation extending parallel to each other and mate with various guide rails In use for crossing from one longitudinal side to the opposite longitudinal side of the sorting device, during which movement the associated pusher shoe pushes a product that may be present on the associated carrier off said carrier. The middle guide wheel of the three guide wheels of each pusher shoe has a larger diameter and is provided deeper under the associated pusher shoe than the two outer guide wheels. During movement of a pusher shoe from one longitudinal side to the other longitudinal side of the sorting device, the middle guide wheel rolls along and against the rear side, seen in the conveying direction, of a guide rail oriented at an angle to the conveying direction, which guide rail is locally interrupted. Connecting pieces, via which carriers are connected to a conveyor chain, can pass at said Interruption. At the location of said Interruption a relatively short second guide rall having a length equal to the length of the interruption in the guide rail is provided at the rear side of the guide rail, against and along the rear side of which second guide wheel one of the outer guide wheels rolls while the middle guide wheel passes the interruption.

The object of the present invention Is to provide a constructionally simpler solution for guiding a pusher element along a sorting guide oriented at an angle to the conveying direction, In which an interruption is present. In order to accomplish that object, a sorting device according to claim 1 is provided. Preferably the downstream guide rail has a downstream end which, seen in the transverse direction, is spaced from the other longitudinal guide or at least the extension thereof in order to enable at least one second guide element forming part of a pusher element moving in the conveying direction to pass the sorting guide between the downstream end of the downstream guide rail and the associated longitudinal guide. This typical aspects use the simplest and most robust possible design for the guide means as well as the second guide elements, which may lead to a significantly reduced cost price of the sorting device.

Within this framework it is furthermore preferable if a pusher element does not comprise more than or fewer than two second guide elements for each carrier guide, whilst furthermore preferably the two second guide elements have identical dimensions. After all, the number of components is reduced by limiting the number of second guide elements to two, whilst designing the two second guide elements to have identical dimensions makes the two second guide elements in question interchangeable, so that only one type of second guide elements needs to be kept in store, for example for maintenance purposes.

A connecting line between centres of the two second guide elements is preferably oriented transversely to the conveying direction, resulting in a mirror-symmetrical situation for sorting out products to one longitudinal side and sorting out products to the other longitudinal side.

The switch means are operable between a passive position and an active position, in which passive position the switch means allows a second guide element which approaches the switch means from an upstream part of a longitudinal guide to pass without impediment to a downstream part of the longitudinal guide being in line therewith; and in which active position the switch means diverts a second guide element which approaches the switch means from an upstream part of the longitudinal guide to the sorting guide.

A very reliable functioning of the switch means in the active position is ensured if an upstream free end of the switch means joins a free end of the upstream part of the longitudinal guide in the active position.

From the viewpoint of constructional simplicity it is furthermore preferable in that connection if the switch means can pivot to and fro between the passive position and the active position about a first pivot axis.

Furthermore preferably, the first pivot axis is located on the inner side of the associated longitudinal guide, so that the changeover between the passive position and the active position can take place In a simple and quick manner.

According to a very important preferred embodiment at least one carrier is provided with two parallel carrier guides, with the pusher element associated with the carrier being guided by said two carrier guides when a product is being sorted out. In this way it is possible to design the carrier element as well as the pusher element to have relatively large dimensions, for example dimensions that make it possible to support products, such as packages or pieces of luggage, on a supporting surface of a single carrier element.

Within this framework it is preferable if the pushing member has an elongated shape, seen in the conveying direction.

In order to maximally utilise the length of the pushing member and of the supporting surface, the two parallel carrier guides are preferably provided at or at least near opposite ends of the pushing member.

To enable the pushing member to assume an oblique orientation, seen in the longitudinal direction thereof, relative to the conveying direction during a sorting pushing movement it is preferable if the pushing member comprises two pushing member portions which are telescopically movable with respect to each other. In this way a temporary change in the length of the pushing member can be realised.

In particular for the situation in which the pushing member makes a pivoting movement in addition to a lateral translating movement while the pusher element crosses from one longitudinal side to the other longitudinal side, it is preferable if the pusher element comprises a guide assembly for each carrier guide, each guide assembly comprising at least a first guide element and two second guide elements, whilst each guide assembly is pivotally connected to the pushing member associated with the pusher element about a second pivot axis.

To ensure that a second guide element will abut against a guide rail on either side of an interruption in the sorting guide, it is preferable if said second pivot axis is located upstream or downstream of the associated second guide elements, more preferably if said second pivot axis is located outside the space which is bounded by a line which is oriented perpendicular to the upstream guide rail and which extends through a contact point between a second guide element and the upstream guide rail and a line which is oriented perpendicular to the downstream guide rail and which extends through a contact point between the other second guide element and the downstream guide rail during passage of the interruption located between the upstream guide rail and the downstream guide rail by the associated guide assembly. The fact that a continuous abutment is realised during passage of the interruption not only prevents extra wear, but it also prevents objectionable noise being generated, which is furthermore advantageous for health and safety reasons.

The invention will now be explained in more detail by means of a description of a preferred embodiment of a device according to the invention, in which reference is made to the following figures:
Figure 1 shows two sorting units forming part of a sorting device according to the invention;
Figure 2 is a partially transparent view of a sorting unit according to figure 1;
Figure 3 is a view of a sorting unit according to figure 1, in which a guide assembly thereof is shown in more detail;
Figures 4a-4f show four successive situations during operation of the sorting device according to figure 1;
Figures 5a and 5b show a switch forming part of the sorting device in the passive position and in the active position thereof, respectively;
Figure 6 shows a sorting unit with an upstream guide assembly just before it passes an interruption in an obliquely oriented sorting guide;
Figures 7a-7d show successive situations of the guide assembly according to figure 6 while it passes the interruption;
Figure 8 shows a sorting unit with a downstream guide assembly just before it passes an interruption in an obliquely oriented sorting guide; and
Figures 9a-9d show successive conditions of the guide assembly according to figure 6 while it passes the interruption.

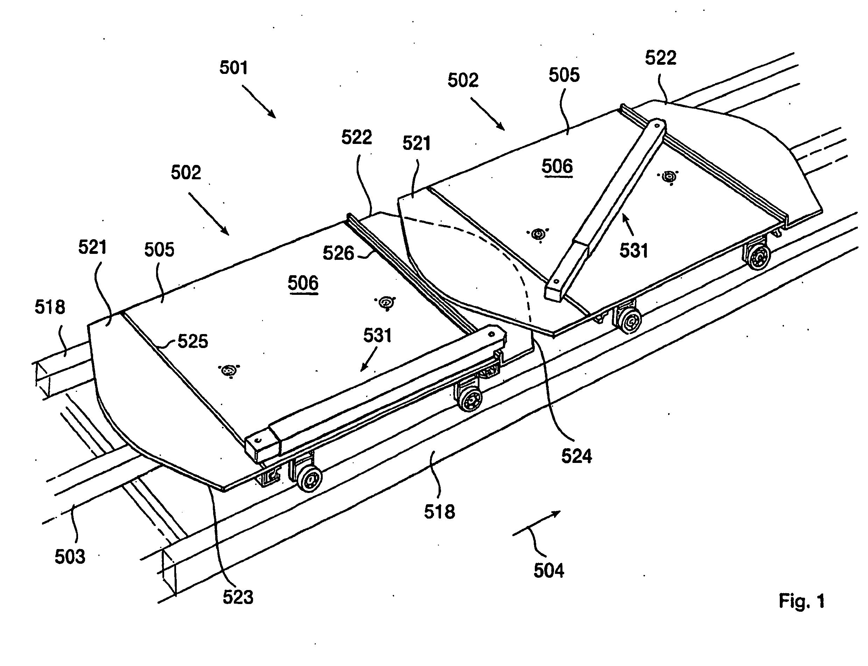

Figure 1 shows a part of a sorting device 501. The sorting device 501 comprises sorting units 502 arranged one behind another, two of which are shown in figure 1. The sorting units 502, which are arranged in an endless train, are each connected to an endless conveyor chain 503, which is driven in the longitudinal direction of the conveyor chain 503 by drive means (not shown). Because of the connection between the conveyor chain 503 and each of the sorting units 502, the sorting units 502 move jointly with the conveyor chain 503 in a conveying direction 504.

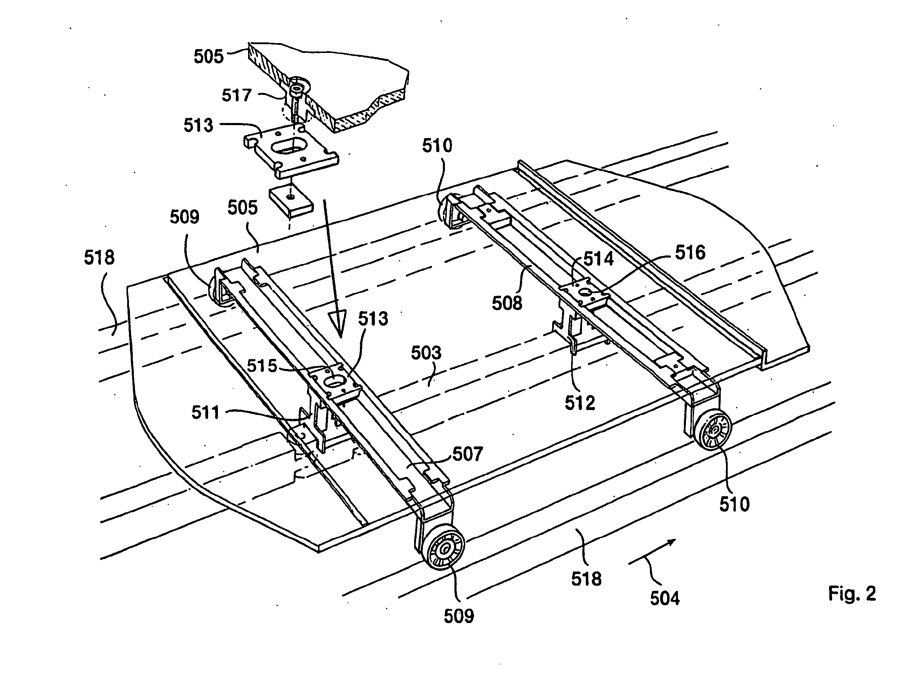

Each sorting unit 502 comprises a carrier plate 505 with a rectangular supporting surface 506 at the upper side thereof for supporting products to be sorted, such as pieces of luggage at airports or packages in distribution centres. The carrier plate 505 itself is supported by two wheel arms 507, 508 (figure 2) extending transversely to the conveying direction 504. Mounted to the ends of the wheel arms 507, 508 are fixed runners 509, 510. The runners 509, 510 run on rails 518.

The wheel arms 507, 508 are rigidly connected to a link of the conveyor chain 503 in the centre of their length by means of connecting arms 511, 512. At their upper side the wheel arms 507, 508 are provided with connecting plates 513, 514, respectively, in the centre of their length. Said connecting plates 513, 514 are provided with a slotted hole 515, which extends in the conveying direction 504, and with a circular hole 516, respectively. At the location of the slotted hole 515 and the circular hole 516 the carrier plate 505 comprises a downwardly extending connecting pin 517, whose diameter conforms to that of the slotted hole 515 and the circular hole 516.

In a straight part of the conveying path the connecting pin 517 associated with a slotted hole 515 extends at the end of the slotted hole 515 remote from the associated circular hole 516. When passing through bends, the connecting pin 517 in question will move within the slotted hole 515 in the direction of the associated circular hole 516 as a result of the arc-chord effect. Moreover, upon passing through bends the wheel arms 507, 508 will rotate about the central axis of the sorting unit 502 associated with the connecting pins 517 with respect to the carrier plate 505 because of the rigid connecting with the conveyor chain 503.

Each sorting unit 502 furthermore comprises an overlap plate 521, 522 at two opposite ends, which overlap plates are positioned at different vertical levels and which overlap with respective overlap plates 521, 522 of an adjacent sorting unit 502. The overlap plates 521, 522 have a convex edge 523, 524 at the ends of the associated sorting unit 502, so that adjacent conveying units 502 will not collide in bends, either. The overlap plates 521, 522 of the various conveying units 502 at least largely fill the area between the carrier plates 505 of the various conveying units 502, so that the risk of products landing between the carrier plates 505, which might cause the sorting device to malfunction, is significantly reduced if not ruled out altogether.

The overlap plates 521, 522 are connected to the associated carrier plate 505 at the longitudinal sides of the sorting device 501, with a certain spacing being present between the overlap plates 521, 522 on the one hand and the carrier plate 505 on the other hand. As a result, a small gap 525, 526 is present between the overlap plates 521, 522 on the one hand and the carrier plate 505 on the other hand.

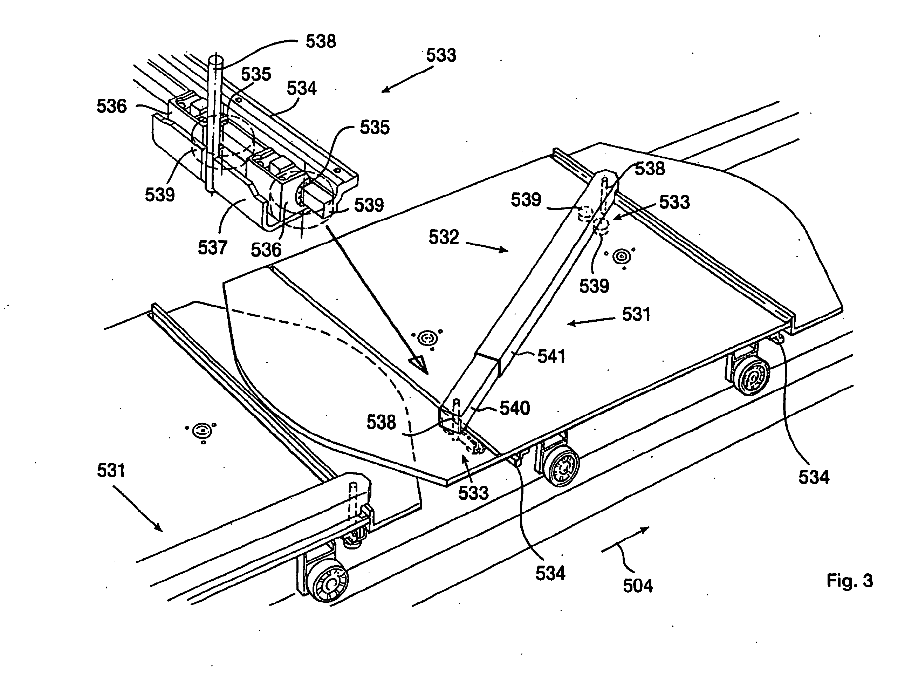

Furthermore referring to figure 3, each sorting unit 502 also comprises a pusher element 531, which is at least substantially made up of an elongated telescopic pushing member 532 extending the length of the carrier plate 505, at the ends of which a guide assembly 533 is provided. Each guide assembly 533 cooperates with a carrier guide 534. Two carrier guides 534 are provided for each carrier plate 505, viz at the front side and at the rear side of the carrier plate 505, seen in the conveying direction 504, on the underside thereof, near the gaps 525, 526. The carrier guides 534 extend transversely to the conveying direction 503. Each guide assembly 533 is provided with two sliding shoes 535 of plastic material, which engage round a guiding portion of the associated carrier guide 534. The sliding shoes 535 form part of a slide block 536 and are mounted to the horizontal part of a corner strip 537.

The guide assembly 533 further comprises a vertical pivot pin 538, which is attached to the upright part of the corner strip 537. Under the horizontal part of the corner strip 537, two guide wheels 539 being rotatable about their vertical axes are provided side by side, which guide wheels cooperate with guide means yet to be described for moving the guide assembly 533 in question from one longitudinal side to the other longitudinal side of the sorting device 501. The guide assemblies 533 associated with a pusher element 531 of a sorting unit 502 are pivotally connected to the pushing member via the respective pivot pins 538. The pushing member 532 comprises two pushing member portions 540, 541, of which the pushing member portion 530 can telescope into and out of pushing member portion 541. In this way the length of the pushing member 532 can be adapted to the distance between the associated guide assemblies 533.

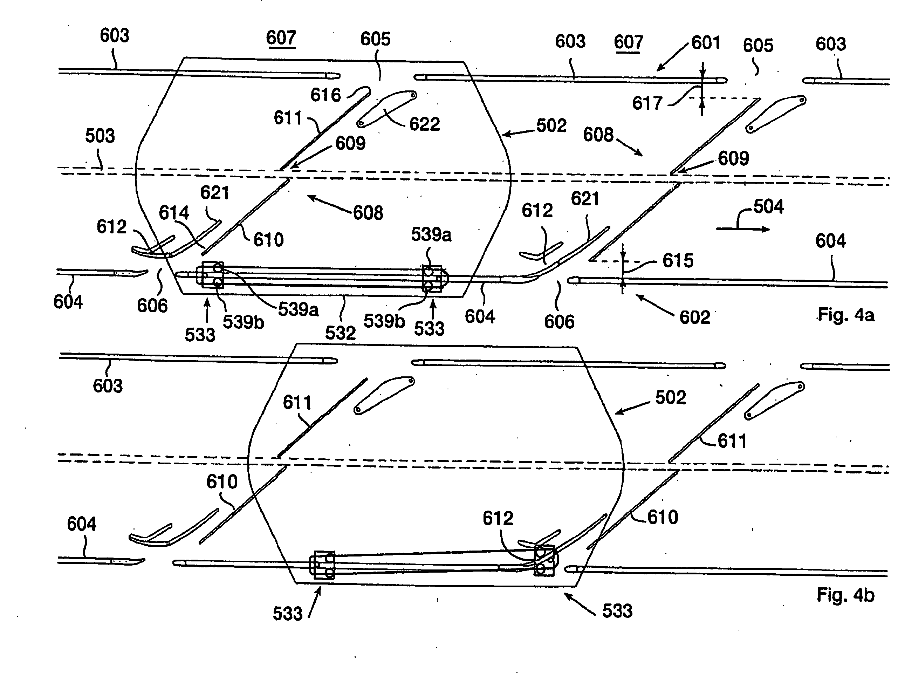

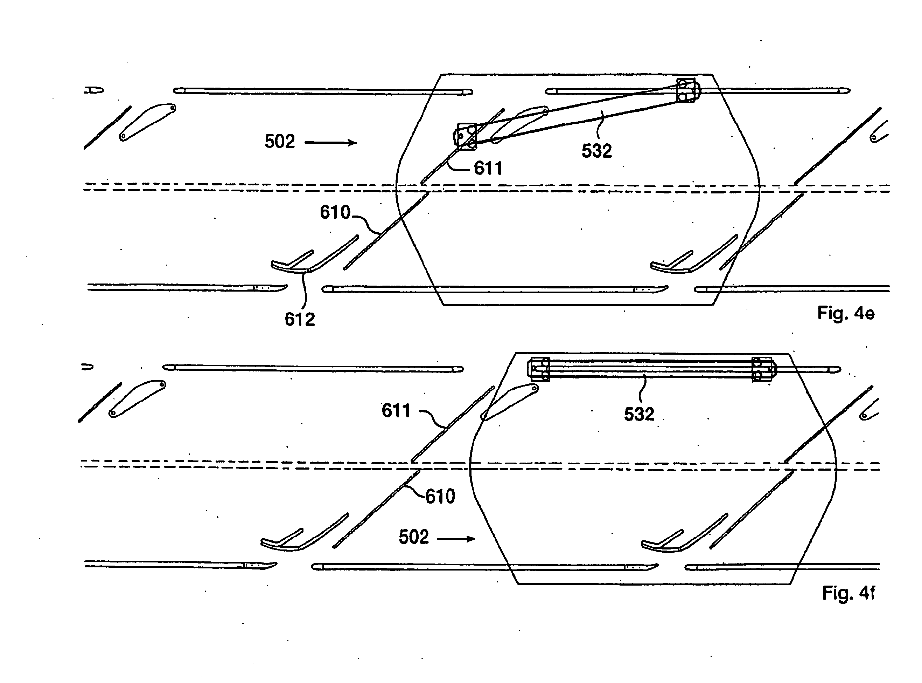

Now the guide means already mentioned in the foregoing, including the manner in which the guide wheels 539 of each guide assembly 533 cooperate with said guide means, will be discussed in more detail with reference to figures 4a-9d. The guide means comprise longitudinal guides 601, 602 extending parallel to the conveying direction 504, which longitudinal guides are provided on opposite longitudinal sides of the sorting device 501. The longitudinal guides 601, 602 each consist of a number of longitudinal rails 603 and 604, respectively, arranged in line with each other. The facing ends of the longitudinal rails 603 and 604 arranged one behind the other are spaced some distance apart, thus providing passages 605 and 606 between the longitudinal rails 603 and 604, through which guide wheels 539 can pass, as will be elucidated hereinafter.

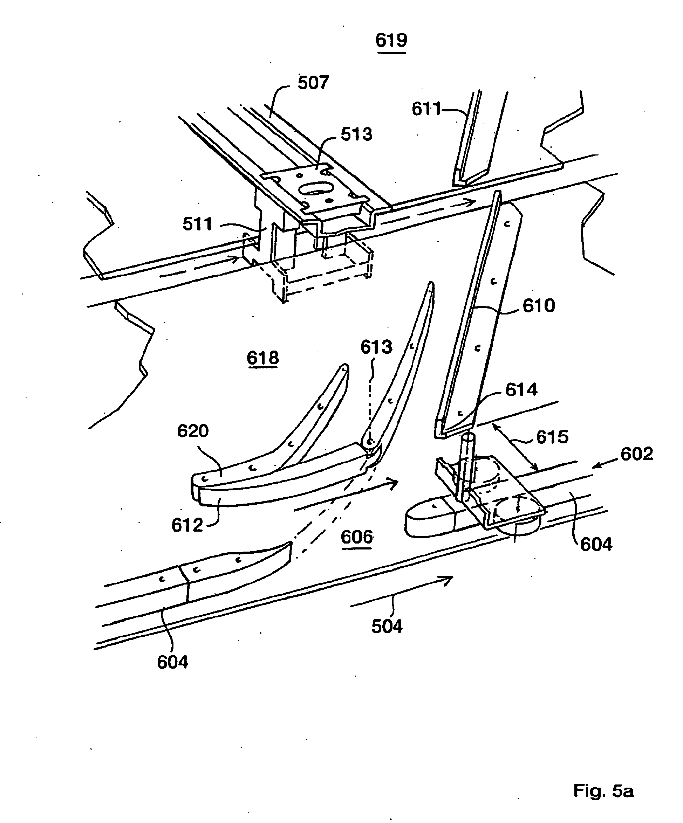

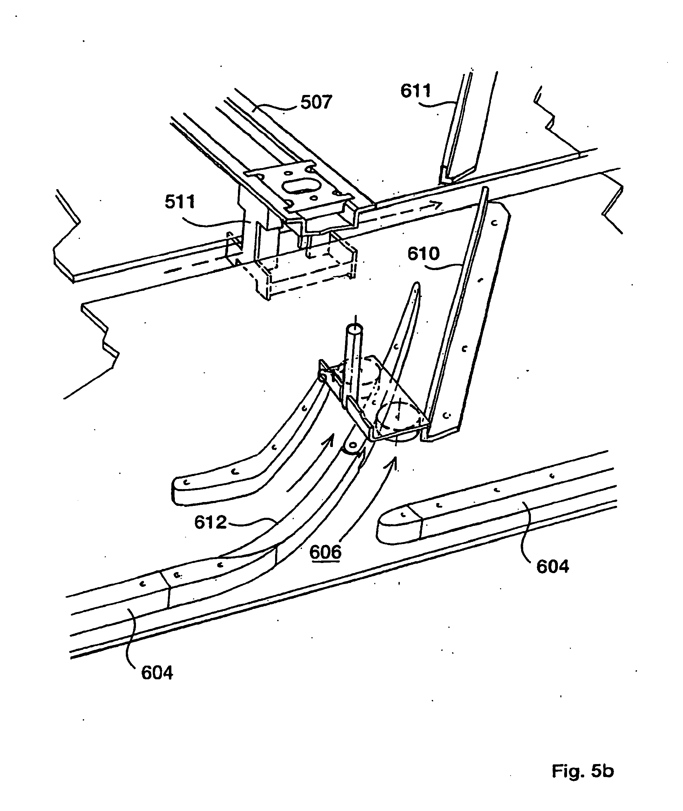

The guide means further comprise a sorting guide 608 at the sorting locations 607, which sorting guide is oriented at an angle to the conveying direction 504. The sorting guide 608 is provided with an interruption 609, where the connecting arms 511, 512 can pass the sorting guide 608. Each sorting guide 608 comprises an upstream guide rail 610 upstream of the interruption 609 and a downstream guide rail 611 downstream of the interruption 609. The guide rails 610 and 611 extend in parallel directions, and consequently they are not in line with each other. Although the guide rails 610, 611 are rectilinear in the present preferred embodiment, it is also quite possible within the framework of the present invention for the guide rails 610, 611 to be curvilinear, providing that the guide rails 610, 611 extend in parallel directions at the location of the interruption 609. The upstream guide rail 610 has an upstream end 614, which is spaced from the associated longitudinal guide 602 by a distance 615. The downstream guide rail 611 has a downstream end 616, which is spaced from the associated longitudinal guide 601 by a distance 617. The guide means are mounted to mounting plates 618, 619 (figure 5).

The guide means further comprise switch means 612 located upstream of each sorting guide 608, which switch means are pivotable about a vertical pivot axis 613 provided on the inner side of the associated longitudinal guide 602, spaced therefrom by some distance, between a passive position as shown in figure 5a and on the left-hand side of figure 4a, and an active position as shown in figure 5b and on the right-hand side of figure 4a. In that passive position shown in figure 5a the switch means 612 abuts against the stop strip 620 with its inner side.

The sorting means further comprise an auxiliary guide 621 upstream of an associated upstream guide rail 610, which auxiliary guide 621 extends parallel to said upstream guide rail 610 along an upstream part of the length of said upstream guide rail 610. The guide means further comprise an auxiliary guide 622 downstream of the downstream guide rail 611, which auxiliary guide 622 extends parallel to said downstream guide rail 611 along part of the length of said downstream guide rail 611.

The cooperation between the pusher element 531, more specifically the guide assemblies 533 thereof, even more specifically the guide wheels 539 thereof, with the guide means as described above is as follows: The starting situation is the situation in which the guide wheels 539 of the two guide assemblies 533 of a pusher element 531 extend on either side of the longitudinal rails 604, and in which consequently the pushing member 532 extends directly above the longitudinal rails 604 in question or directly above the longitudinal guide 602, as is shown in figure 4a. As a result of the movement of the conveyor chain 503 and the connection between the conveyor chain 503 and the sorting units 502 via the connecting arms 511, 512, the sorting units 502 move in the conveying direction 504. During said movement, the guide assemblies 533 pass the switch means 612. The space between the guide wheels 539 associated with a guide assembly 533 is substantially equal to the thickness of the longitudinal rails 604, without ruling out the possibility of some play, for example about 5 mm, being present, so that the guide wheels 539 are guided by opposite side flanks of the longitudinal rails 604. To reduce the noise level it is advantageous to design the downstream ends of the longitudinal rails 604 to have a thickness such that any play between guide wheels 539 and the longitudinal rails 604 is lost at that location. This achieves that a possible passage of the guide wheels 539 from the longitudinal rails 604 to a switch means 612 (providing of course that said switch means is in the active position, as will be discussed in more detail yet hereinafter) can take place without producing excessive noise.

Insofar as the switch means 612 are in the passive position, the guide assemblies 533, and thus the pusher element 531 in question, will continue to follow the longitudinal guide 602. Because of the fact that the upstream end 614 of the upstream guide rail 610 is spaced from the longitudinal guide 602 by a distance 615, sufficient space is available for the inner guide wheel 639a to pass the upstream guide rail 610, in spite of the fact that the guide wheel 539a and the upstream guide rail 610 extend at the same height.

As soon as a guide wheel 539 passes a switch means 612 which is in the active position, as is shown for the right-hand switch means 612 in figure 4a, with the upstream end of the switch means 612 connecting to a downstream end of a respective longitudinal rail 604, the inner guide wheel 539a is deflected inwardly in the direction of the other longitudinal side. During said inward movement, the outer guide wheel 539b passes the opening 606 at the location of the switch means 612 in question. Having passed the active switch means 612, the guide wheel 539a moves further along the auxiliary guide 621. Once the outer guide wheel 539b has been moved a distance 615 in the direction of the longitudinal guide 601, said guide wheel 539b will roll against the upstream side of the upstream guide rail 610. Once the guide wheel 539a has completely passed the auxiliary guide 621, the guide assembly 533 is exclusively guided by guiding cooperation between the guide wheel 539b and the upstream guide rail 610, at least up to the interruption 609.

Just before the guide wheel 539b passes the downstream end of the upstream guide rail 610, the guide wheel 539a takes over the guiding function by guiding cooperation with the downstream guide rail 611. In order to have said transition take place gradually, thereby reducing the amount of noise being produced, it is advantageous to have the thickness of the guide rails 610 and 611 decrease, for example a few mm, at the location of the facing ends of the guide rails 610 and 611, so that the guide wheel 539b will run off the guide rail 610 along gradual lines and the guide wheel 539a will run onto the guide rail 611 along gradual lines. This principle may also be used advantageously at other passages in the guide means.

Near the downstream end of the downstream guide rail 611, the guide wheel 539b, too, will roll against the auxiliary guide 622, which, once the guide wheel 539a has passed the downstream end of the downstream guide rail 611, will guide the guide wheels 539 further in the direction of the longitudinal guide 601, in such a manner that the guide wheels 539 will roll against opposite flanks of the longitudinal rail 603. During said movement the guide wheel 539a moves through the passage 605.

Because of the fact that the downstream end 616 of the downstream guide rail 611 is spaced from the longitudinal guide 601 by a distance 617, guide wheels 539b associated with a pusher element 531 of a downstream sorting unit 502, which run along the inner side of a longitudinal rail 603, can pass the guide rail 611 without impediment in spite of the fact that the guide wheels 539b are present at the same vertical level as the downstream guide rail 611.

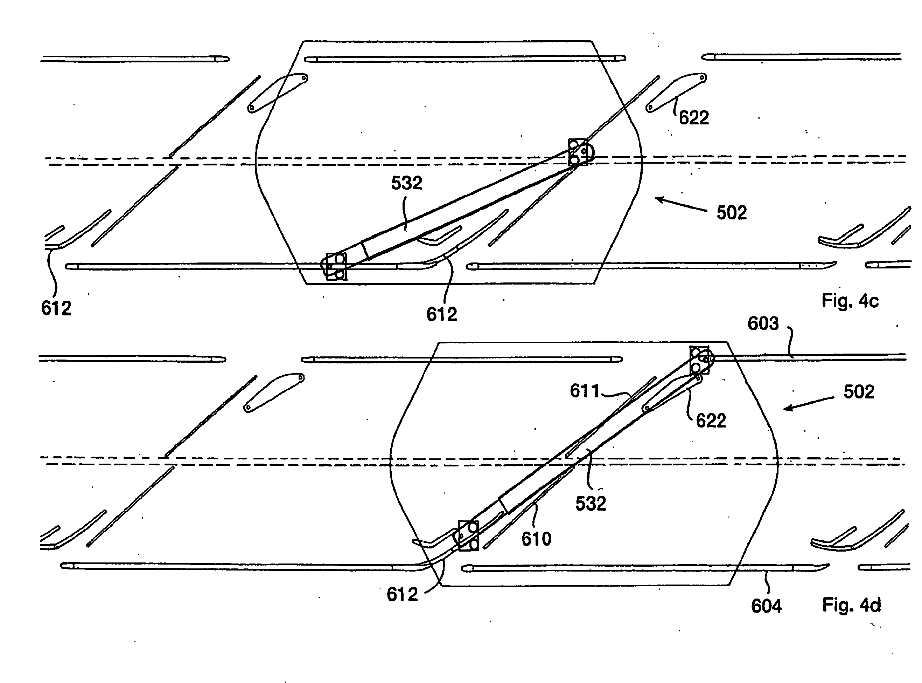

Not only the guidance of a front guide assembly 533 of a sorting unit 502 but also that of a rear guide assembly 533 of the sorting unit 502 in question takes place in the above-described manner. As is shown in particular in figures 4c and 4d, but also to a certain extent in figures 4b and 4e, the pushing member 532 assumes an oblique orientation relative to the conveying direction 504 while the guide assembly 533 is being guided along the sorting guide 608. In an alternative embodiment (not shown) said orientation may also remain parallel to the conveying direction 504, viz. if use is made of two parallel sorting guides 608 including the associated switch means 612, auxiliary guides 621, 622 and passages 605, 606, which have the same centre-to-centre distance as the guide assemblies 533 of a specific sorting unit 502. In such a situation there is no need for a pushing member 532 to be pivotally connected to the two guide assemblies 533, but it is also possible to use a rigid connection. Furthermore there is no need in that case to make the pushing member 532 telescopic, but the pushing member 532 may have a fixed length.

Although the cooperation between the guide assemblies 533 and the guide means has been explained in the foregoing on the basis of the situation in which the guide assemblies 533 of the longitudinal guide 602 are moved towards the longitudinal guide 601 during movement of the sorting unit 502 in the conveying direction 504, it is of course also possible, as the skilled person will appreciate, to move the guide assemblies 533 from the longitudinal guide 601 to the longitudinal guide 602. In that situation the guide means must be arranged in mirror symmetry relative to a vertical plane through the central axis of the conveyor chain 503.

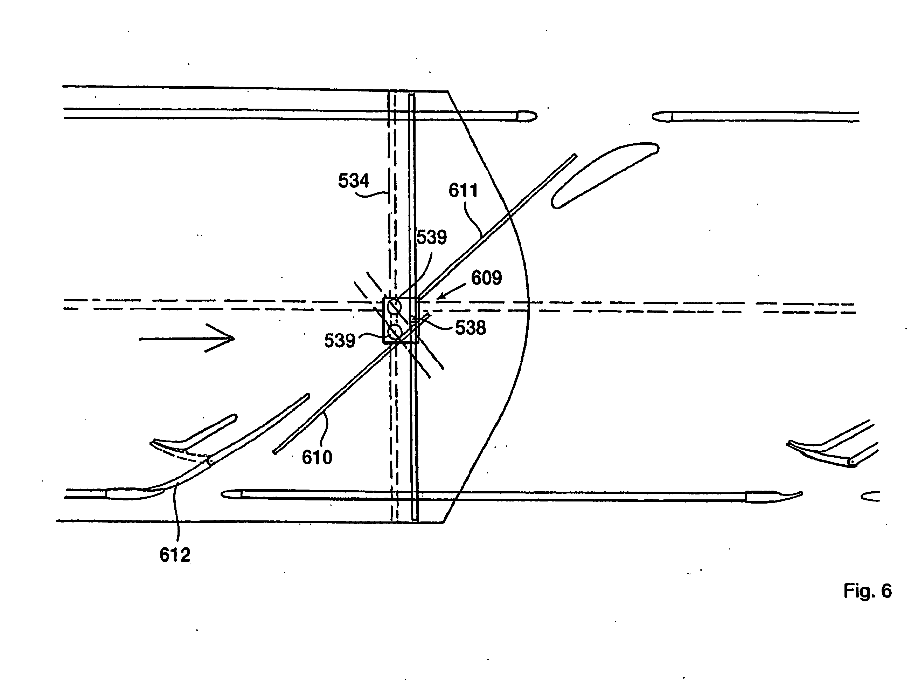

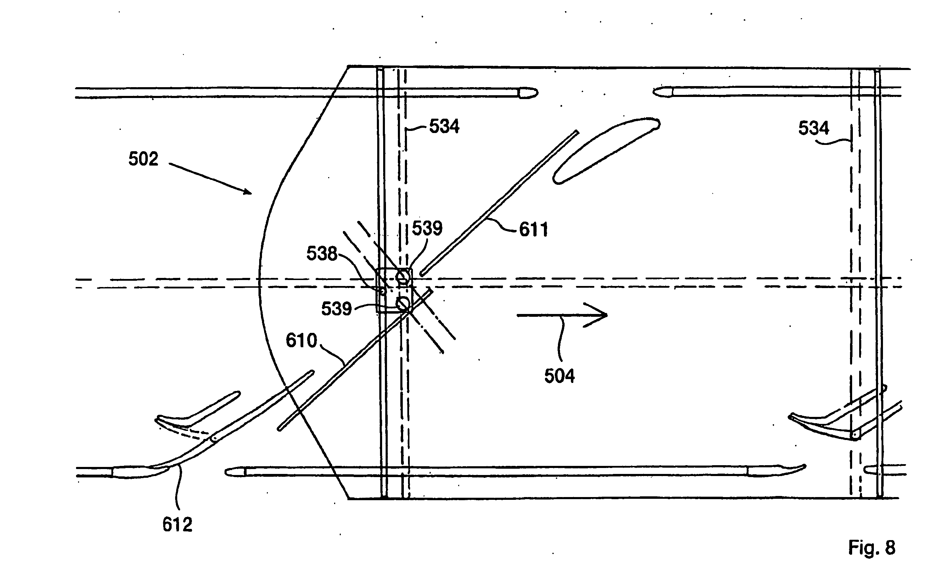

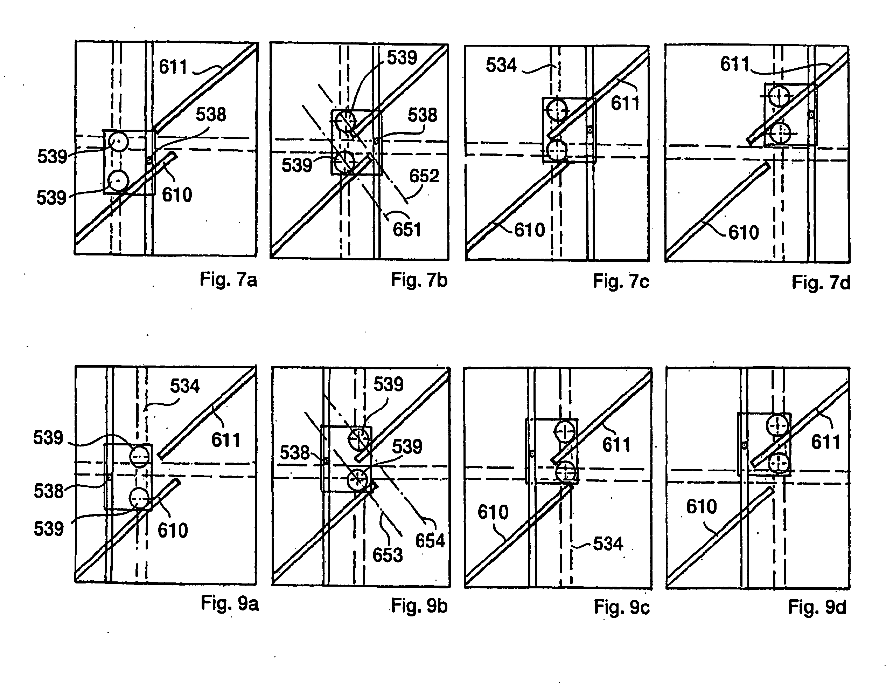

Referring to figures 6-9d, we will now discuss the manner in which a front guide assembly 533 (figures 6-7d) and a rear guide assembly 533 (figures 8-9d) pass an interruption 609 in the sorting guide 608. Numerals 651, 652 and 653, 654 in figure 7b and 9b, respectively, indicate lines perpendicular to the upstream guide rail 610, which extend through the centre of the two guide wheels 539. As is apparent into alia from the aforesaid figures, the associated pivot pins 538 are located outside the area enclosed by the respective lines 651, 652 and 653,654. Since the pivot pin 538 is located outside the aforesaid area, the direction of the moment acting on the guide assembly 533 will not change when the guide assembly 533 passes from the upstream guide rail 610 to the downstream guide rail 611, in spite of the change in direction that takes place. This provides the important advantage that there will no "rattling" of the guide assembly 533, which may lead to undesirable noise being produced.

## Claims

1. A sorting device (501) comprising an elongated, closed, flexible conveying element (503), drive means for driving said conveying element in a conveying direction (504), carriers (505) provided with a supporting surface (506) above the conveying element for supporting products to be sorted, connecting elements (611, 512) for connecting the carriers (505) to the conveying element (503), at least some of which carriers being provided with a pusher element (531) comprising a pushing member (532) for pushing a product to be sorted out off the supporting surface (506) in a direction transversely to the conveying direction (504), as well as a carrier guide (534) for guiding the pusher element (531) in said transverse direction relative to the associated carrier (505), each pusher element (531) comprising first guide elements (535) arranged for guiding cooperation with an associated carrier guide (534) as well as second guide elements (538), said sorting device further comprising guide means for guiding cooperation with said second guide elements (539), which guide means comprise longitudinal guides (603, 604) extending parallel to the conveying direction on opposite longitudinal sides of the sorting device as well as at least one stationary sorting guide (608) oriented at an angle to the conveying direction between the supporting surface (508) and the conveying element (503) for guiding second guide elements (539) from one longitudinal guide (803, 604) to the other longitudinal guide (804, 603), which sorting guide (608) and which conveying element (503) cross each other, with the sorting guide (608) comprising an interruption (609) through which the connecting elements (511, 512) can pass, which sorting guide (608) comprises an upstream guide rail (810) upstream of the interruption (809) and a downstream guide rail (611) downstream of the interruption (609), said upstream guide rail (810) and said downstream guide rail (611) extending in parallel directions at least at the location of said interruption (609) the guide means further comprising an auxiliary guide (821) extending parallel to the upstream guide (610) and switch means (812), **characterised in that** the switch means (612) are located upstream of the auxiliary guide (621), each second guide element (539) comprising two guide wheels (539a, 539b) between which subsequently one longitudinal guide (603, 604), the switch means (612), and the auxiliary guide (621) extend during the guidance of the guide wheels (539a, 539b) from one longitudinal guide (603, 604) to the other longitudinal guide (604, 603), during which guidance the upstream guide (610) cooperates with only one of the guide wheels (539a, 539b), and **in that** the upstream guide rail (610) has an upstream end (614) which, seen in the transverse direction, is spaced (615) from a longitudinal guide (604) located on the side of the upstream end or at least the extension thereof. In order to enable at least one second guide element (539) forming part of a pusher element (531) moving in the conveying direction (504) to pass the sorting guide (608) between the upstream end (614) of the upstream guide rail (610) and the associated longitudinal guide (604, 603).

2. A sorting device (501) according to claim 1 **characterised in that** the downstream guide rail (611) has a downstream end (616) which, seen in the transverse direction, is spaced (611) from the other longitudinal guide (603) or at least the extension thereof in order to enable at least one second guide element (539) forming part of a pusher element (531) moving in the conveying direction (504) to pass the sorting guide (608) between the downstream end (616) of the downstream guide rall (611) and the associated longitudinal guide (804, 603).

3. A sorting device according to claim 1 or 2, **characterised in that** a pusher element (531) does not comprise more than or fewer than two second guide elements (539) for each carrier guide (534).

4. A sorting device according to claim 3, **characterised in that** the two second guide elements (539) have identical dimensions.

5. A sorting device according to claim 3 or 4, **characterised in that** a connecting line between centres of the two second guide elements (539) is oriented transversely to the conveying direction (504).

6. A sorting device according to any one of the preceding claims, **characterised In that** said switch means (612) are operable between a passive position and an active portion, in which passive position the switch means (612) allows a second guide element (539) which approaches the switch means (612) from an upstream part of a longitudinal guide (603, 604) to pass without impediment to a downstream part of the longitudinal guide (603, 604) being In line therewith, and in which active position the switch means (612) diverts a second guide element (539) which approaches the switch means from an upstream part of a longitudinal guide (603, 604) to the sorting guide (608).

7. A sorting device according to claim 6, **characterised in that** an upstream free end of the switch means (612) joins a free end of the upstream part of the longitudinal guide (603, 604) In the active position.

8. A sorting device according to claim 6 or 7, **characterised in that** the switch means (612) can pivot to and fro between the passive position and the active position about a first pivot axis (613).

9. A sorting device according to claim 8, **characterised in that** the first pivot axis (613) is located on the inner side of the associated longitudinal guide (603, 604).

10. A sorting device according to any one of the preceding claims, **characterised in that** at least one carrier (605) is provided with two parallel carrier guides (534), with the pusher element (531) associated with the carrier (505) being guided by said two carrier guides (534) when a product is being sorted out.

11. A sorting device according to claim 10, **characterised in that** the pushing member (532) has an elongated shape, seen In the conveying direction (504).

12. A sorting device according to claim 10 or 11, **characterised in that** the two parallel carrier guides (534) are provided at or at least near opposite ends of the pushing member (532).

13. A sorting device according to claim 10, 11 or 12, **characterised in that** the pushing member (532) comprises two pushing member portions (540, 541) which are telescopically movable with respect to each other.

14. A sorting device according to claim 10, 11, 12 or 13, **characterised in that** the pusher element (531) comprises a guide assembly (533) for each carrier guide (534), each guide assembly (533) comprising at least a first guide element (535) and two second guide elements (539), whilst each guide assembly (533) is pivotally connected to the pushing member (532) associated with the pusher element (531) about a second pivot axis (538).

15. A sorting device according to claim 14, **characterised in that** said second pivot axis (538) is located upstream or downstream of the associated second guide elements (539).

16. A sorting device according to claim 14 or 15, in that said second pivot axis (538) Is located outside the space which is bounded by a line (653) which is oriented perpendicular to the upstream guide rail (610) and which extends through a contact point between a second guide element (539) and the upstream guide rail (611) and a line which is oriented perpendicular to the downstream guide rail and which extends through a contact point between the other second guide element (539) and the downstream guide rail (611) during passage of the interruption (609) located between the upstream guide rail (610) and the downstream guide rail (611) by the associated guide assembly (533).

## Patentansprüche

1. Sortiervorrichtung (501), umfassend ein längliches, geschlossenes, flexibles Förderelement (503), Antriebsmittel zum Antreiben des Förderelements in eine Förderrichtung (504), Träger (505), die mit einer Tragfläche (506) versehen sind, oberhalb des Förderelements zum Tragen von zu sortierenden Produkten, Verbindungselemente (511,512) zum Verbinden der Träger (505) mit dem Förderelement (503), wobei mindestens einige der Träger mit einem Schieberelement (531) ausgestattet ist, das ein Schiebeglied (532) zum Abschieben eines auszusortierenden Produkts von der Tragfläche (506) in einer quer zu der Förderrichtung (504) verlaufenden Richtung umfasst, sowie eine Trägerführung (534) zum Führen des Schieberelements (531) in der Querrichtung relativ zu dem zugeordneten Träger (505), wobei jedes Schieberelement (531) erste Führungselemente (535), die zum führenden Zusammenwirken mit einer zugeordneten Trägerführung (534) angeordnet sind, sowie zweite Führungselemente (538) umfasst, wobei die Sortiervorrichtung ferner Führungsmittel zum führenden Zusammenwirken mit den zweiten Führungselementen (539) umfasst, wobei die Führungsmittel Längsführungen (603,604) umfassen, die sich parallel zu der Förderrichtung auf entgegengesetzten Längsseiten der Sortiervorrichtung erstrecken, sowie mindestens eine stationäre Sortierführung (608), die in einem Winkel zu der Förderrichtung zwischen der Tragfläche (506) und dem Förderelement (503) ausgerichtet ist, zum Führen zweiter Führungselemente (539) von einer Längsführung (603, 604) zu der anderen Längsführung (604,603), wobei die Sortierführung (608) und das Förderelement (503) einander kreuzen, wobei die Sortierführung (608) eine Unterbrechung (609) umfasst, durch welche die Verbindungselemente (511,512) passieren können, wobei die Sortierführung (608) vorgelagert der Unterbrechung (609) eine vorgelagerte Führungsschiene (610) und nachgelagert der Unterbrechung (609) eine nachgelagerte Führungsschiene (611) umfasst, wobei sich die vorgelagerte Führungsschiene (610) und die nachgelagerte Führungsschiene (611) mindestens an dem Ort der Unterbrechung (609) in parallelen Richtungen erstrecken, wobei die Führungsmittel ferner eine Hilfsführung (621), die sich parallel zu der vorgelagerten Führung (610) erstreckt, und Weichenmittel (612) umfassen, **dadurch gekennzeichnet, dass** die Weichenmittel (612) vorgelagert der Hilfsführung (621) angeordnet sind, wobei jedes zweite Führungselement (539) zwei Führungsräder (539a, 539b) umfasst, zwischen denen sich nachfolgend eine Längsführung (603,604), die Weichenmittel (612) und die Hilfsführung (621) während des Führens der Führungsräder (539a,539b) von einer Längsführung (603,604) zu der anderen Längsführung (604,603) erstrecken, wobei während dieses Führens die vorgelagerte Führung (610) mit nur einem der Führungsräder (539a,539b) zusammenwirkt, und dass die vorgelagerte Führungsschiene (610) ein vorgelagertes Ende (614) aufweist, welches, in der Querrichtung betrachtet, von einer Längsführung (604), die auf der Seite des vorgelagerten Endes angeordnet ist, oder mindestens der Verlängerung davon beabstandet (615) ist, um zu ermöglichen, dass mindestens ein zweites Führungselement (539), welches einen Teil eines Schieberelements (531) bildet, das sich in der Förderrichtung (504) bewegt, die Sortierführung (608) zwischen dem vorgelagerten Ende (614) der vorgelagerten Führungsschiene (610) und der zugeordneten Längsführung (604,603) passiert.

2. Sortiervorrichtung (501) nach Anspruch 1, **dadurch gekennzeichnet, dass** die nachgelagerte Führungsschiene (611) ein nachgelagertes Ende (616) aufweist, welches, in der Querrichtung betrachtet, von der anderen Längsführung (603) oder mindestens der Verlängerung davon beabstandet (617) ist, um zu ermöglichen, dass mindestens ein zweites Führungselement (539), welches einen Teil eines Schieberelements (531) bildet, das sich in der Förderrichtung (504) bewegt, die Sortierführung (608) zwischen dem nachgelagerten Ende (616) der nachgelagerten Führungsschiene (611) und der zugeordneten Längsführung (604,603) passiert.

3. Sortiervorrichtung nach Anspruch 1 oder 2, **dadurch gekennzeichnet, dass** ein Schieberelement (531) nicht mehr als oder weniger als zwei zweite Führungselemente (539) für jede Trägerführung (534) umfasst.

4. Sortiervorrichtung nach Anspruch 3, **dadurch gekennzeichnet, dass** die beiden zweiten Führungselemente (539) identische Abmessungen aufweisen.

5. Sortiervorrichtung nach Anspruch 3 oder 4, **dadurch gekennzeichnet, dass** eine Verbindungslinie zwischen Mittelpunkten der beiden zweiten Führungselemente (539) quer zu der Förderrichtung (504) ausgerichtet ist.

6. Sortiervorrichtung nach einem beliebigen der vorhergehenden Ansprüche, **dadurch gekennzeichnet, dass** die Weichenmittel (612) zwischen einer passiven Position und einer aktiven Position betätigbar sind, wobei das Weichenmittel (612) in der passiven Position ermöglicht, dass ein zweites Führungselement (539), welches sich dem Weichenmittel (612) von einem vorgelagerten Teil einer Längsführung (603, 604) nähert, ohne Behinderung zu einem damit in einer Linie angeordneten nachgelagerten Teil der Längsführung (603,604) passieren kann, und wobei das Weichenmittel (612) in der aktiven Position ein zweites Führungselement (539), welches sich dem Weichenmittel von einem vorgelagerten Teil einer Längsführung (603,604) nähert, zu der Sortierführung (608) ablenkt.

7. Sortiervorrichtung nach Anspruch 6, **dadurch gekennzeichnet, dass** sich in der aktiven Position ein vorgelagertes freies Ende des Weichenmittels (612) an ein freies Ende des vorgelagerten Teils der Längsführung (603,604) fügt.

8. Sortiervorrichtung nach Anspruch 6 oder 7, **dadurch gekennzeichnet, dass** sich das Weichenmittel (612) um eine erste Schwenkachse (613) zwischen der passiven Position und der aktiven Position hin und her schwenken lässt.

9. Sortiervorrichtung nach Anspruch 8, **dadurch gekennzeichnet, dass** die erste Schwenkachse (613) an der Innenseite der zugeordneten Längsführung (603,604) angeordnet ist.

10. Sortiervorrichtung nach einem beliebigen der vorhergehenden Ansprüche, **dadurch gekennzeichnet, dass** mindestens ein Träger (505) mit zwei parallelen Trägerführungen (534) ausgestattet ist, wobei das dem Träger (505) zugeordnete Schieberelement (531) durch die zwei Trägerführungen (534) geführt wird, wenn ein Produkt aussortiert wird.

11. Sortiervorrichtung nach Anspruch 10, **dadurch gekennzeichnet, dass** das Schiebeglied (532) in Förderrichtung (504) betrachtet eine längliche Gestalt aufweist.

12. Sortiervorrichtung nach Anspruch 10 oder 11, **dadurch gekennzeichnet, dass** die beiden parallelen Trägerführungen (534) an oder mindestens nahe entgegengesetzten Enden des Schiebeglieds (532) vorgesehen sind.

13. Sortiervorrichtung nach Anspruch 10,11 oder 12, **dadurch gekennzeichnet, dass** das Schiebeglied (532) zwei Schiebegliedabschnitte (540,541) umfasst, die in Bezug zueinander teleskopartig bewegbar sind.

14. Sortiervorrichtung nach Anspruch 10,11,12 oder 13, **dadurch gekennzeichnet, dass** das Schieberelement (531) eine Führungsbaugruppe (533) für jede Trägerführung (534) umfasst, wobei jede Führungsbaugruppe (533) mindestens ein erstes Führungselement (535) und zwei zweite Führungselemente (539) umfasst, wobei jede Führungsbaugruppe (533) mit dem Schiebeglied (532), das dem Schiebeelement (531) zugeordnet ist, um eine zweite Schwenkachse (538) schwenkbar verbunden ist.

15. Sortiervorrichtung nach Anspruch 14, **dadurch gekennzeichnet, dass** die zweite Schwenkachse (538) vorgelagert oder nachgelagert der zugeordneten zweiten Führungselemente (539) angeordnet ist.

16. Sortiervorrichtung nach Anspruch 14 oder 15, **dadurch gekennzeichnet, dass** die zweite Schwenkachse (538) außerhalb des Raums angeordnet ist, der durch eine Linie (653), welche im rechten Winkel zu der vorgelagerten Führungsschiene (610) ausgerichtet ist und sich durch einen Kontaktpunkt zwischen einem zweiten Führungselement (539) und der vorgelagerten Führungsschiene (611) erstreckt, und eine Linie, die im rechten Winkel zu der nachgelagerten Führungsschiene ausgerichtet ist und sich durch einen Kontaktpunkt zwischen dem anderen zweiten Führungselement (539) und der nachgelagerten Führungsschiene (611) erstreckt, begrenzt wird, während des Passierens der Unterbrechung (609), welche zwischen der vorgelagerten Führungsschiene (610) und der nachgelagerten Führungsschiene (611) angeordnet ist, durch die zugeordnete Führungsbaugruppe (533).

## Revendications

1. Dispositif de tri (501) comprenant un élément de transport (503) allongé, fermé et flexible, des moyens d'entraînement pour entraîner ledit élément de transport dans une direction de transport (504), des éléments porteurs (505) prévus sur une surface de support (506) située au-dessus de l'élément de transport pour supporter des produits devant être trié, des éléments de raccordement (511, 512) pour raccorder les éléments porteurs (505) à l'élément de transport (503), au moins certains desdits éléments porteurs étant pourvus d'un élément pousseur (531) comprenant un organe de poussée (532) pour pousser un produit devant être trié et le faire sortir de la surface de support (506) dans une direction transversale par rapport à la direction de transport (504), ainsi qu'un guide d'élément porteur (534) pour guider l'élément pousseur (531) dans ladite direction transversale par rapport à l'élément porteur (505) associé, chaque élément pousseur (531) comprenant des premiers éléments de guidage (535) configurés pour accomplir un guidage en collaboration avec un guide d'élément porteur (534) associé ainsi que des seconds éléments de guidage (538), ledit dispositif de tri comprenant par ailleurs des moyens de guidage configurés pour accomplir un guidage en collaboration avec lesdits seconds éléments de guidage (539), lesdits moyens de guidage comprenant des guides longitudinaux (603, 604) qui s'étendent parallèlement à la direction de transport sur des côtés longitudinaux opposés du dispositif de tri ainsi qu'au moins un guide de tri stationnaire (608) orienté à un angle par rapport à la direction de transport entre la surface de transport (506) et l'élément de transport (503) pour guider des seconds éléments de guidage (539) de l'un des guides longitudinaux (603, 604) à l'autre des guides longitudinaux (604, 603), ledit guide de tri (608) et ledit élément de transport (503) se coupant mutuellement, le guide de tri (608) comprenant une interruption (609) via laquelle les éléments de raccordement (511, 512) peuvent passer, ledit guide de tri (608) comprenant un rail de guidage amont (610) situé en amont de l'interruption (609) et un rail de guidage aval (611) situé en aval de l'interruption (609), ledit rail de guidage amont (610) et ledit rail de guidage aval (611) s'étendant dans des directions parallèles au moins à l'endroit de ladite interruption (609), les moyens de guidage comprenant par ailleurs un guide auxiliaire (621) qui s'étend parallèlement au guide amont (610) et à des moyens de commutation (612), **caractérisé en ce que** les moyens de commutation (612) sont situés en amont du guide auxiliaire (621), chaque second élément de guidage (539) comprenant deux roues de guidage (539a, 539b) entre lesquelles, à la suite dans l'ordre, l'un des guides longitudinaux (603, 604), les moyens de commutation (612) et le guide auxiliaire (621) s'étendent durant le guidage des roues de guidage (539a, 539b) depuis l'un des guides longitudinaux (603, 604) jusqu'à l'autre des guides longitudinaux (604, 603), guidage durant lequel le guide amont (610) coopère avec l'une seulement des roues de guidage (539a, 539b) et **caractérisé en ce que** le rail de guidage amont (610) comprend une extrémité amont (614) qui, lorsqu'elle est vue dans le sens transversal, est espacée (615) par rapport à un guide longitudinal (604) situé sur le côté de l'extrémité amont ou au moins du prolongement de celui-ci de sorte à permettre à au moins un second élément de guidage (539) faisant partie d'un élément pousseur (531) se déplaçant dans la direction de transport (504) de dépasser le guide de tri (608) entre l'extrémité amont (614) du rail de guidage amont (610) et le guide longitudinal associé (604, 603).

2. Dispositif de tri (501) selon la revendication 1, **caractérisé en ce que** le rail de guidage aval (611) comporte une extrémité aval (616) qui, lorsqu'elle est vue dans le sens transversal, est espacée (617) par rapport à l'autre guide longitudinal (603) ou au moins du prolongement de celui-ci de sorte à permettre à au moins un second élément de guidage (539) faisant partie d'un élément pousseur (531) se déplaçant dans la direction de transport (504) de dépasser le guide de tri (608) entre l'extrémité aval (616) du rail de guidage aval (611) et le guide longitudinal associé (604, 603).

3. Dispositif de tri selon la revendication 1 ou 2, **caractérisé en ce qu'**un élément pousseur (531) ne comprend pas plus de ou pas moins de deux seconds éléments de guidage (539) pour chaque guide d'élément porteur (534).

4. Dispositif de tri selon la revendication 3, **caractérisé en ce que** les deux seconds éléments de guidage (539) ont des dimensions identiques.

5. Dispositif de tri selon la revendication 3 ou 4, **caractérisé en ce qu'**une ligne de raccordement entre des centres des deux seconds éléments de guidage (539) est orientée transversalement par rapport à la direction de transport (504).

6. Dispositif de tri selon l'une quelconque des revendications précédentes **caractérisé en ce que** lesdits moyens de commutation (612) sont aptes à fonctionner entre une position passive et une position active, dans ladite position passive, les moyens de commutation (612) permettant à un second élément de guidage (539) qui se rapproche des moyens de commutation (612) depuis une section amont d'un guide longitudinal (603, 604) de passer sans être gêné jusqu'à une section aval du guide longitudinal (603, 604) qui est aligné avec celui-ci et, dans ladite position active, les moyens de commutation (612) déviant un second élément de guidage (539) qui se rapproche des moyens de commutation depuis une section amont d'un guide longitudinal (603, 604) jusqu'au guide de tri (608).

7. Dispositif de tri selon la revendication 6, **caractérisé en ce qu'**une extrémité libre amont des moyens de commutation (612) rejoint une extrémité libre d'une section amont du guide longitudinal (603, 604) dans la position active.

8. Dispositif de tri selon la revendication 6 ou 7, **caractérisé en ce que** les moyens de commutation (612) peuvent pivoter autour d'un premier axe de pivotement (613) vers et à partir d'entre la position passive et la position active.

9. Dispositif selon la revendication 8, **caractérisé en ce que** le premier axe de pivotement (613) se trouve sur le côté intérieur du guide longitudinal (603, 604) associé.

10. Dispositif de tri selon l'une quelconque des revendications précédentes **caractérisées en ce qu'**au moins l'un des éléments porteurs (505) est pourvu de deux guides d'élément porteur (534) parallèles, l'élément pousseur (531) étant associé à l'élément porteur (505) qui est guidé par lesdits deux guides d'éléments porteurs (534) quand un produit est trié.

11. Dispositif de tri selon la revendication 10, **caractérisé en ce que** l'élément pousseur (532) a une forme allongée lorsqu'il est vu dans la direction de transport (504).

12. Dispositif de tri selon la revendication 10 ou 11, **caractérisé en ce que** les deux guides d'élément porteur (534) parallèles sont prévus au niveau ou au moins à proximité d'extrémités opposées de l'élément pousseur (532).

13. Dispositif de tri selon la revendication 10, 11 ou 12, **caractérisé en ce que** l'élément pousseur (532) comprend deux sections d'éléments pousseur (540, 541) qui peuvent se déplacer de façon télescopique l'une par rapport à l'autre.

14. Dispositif de tri selon la revendication 10, 11, 12 ou 13, **caractérisé en ce que** l'élément pousseur (531) comprend un ensemble de guidage (533) pour chaque guide d'élément porteur (534), chaque ensemble de guidage (533) comprenant au moins un premier élément de guidage (535) et deux seconds éléments de guidage (539), chaque ensemble de guidage (533) étant raccordé à un élément pousseur (532) associé à l'élément pousseur (531) de sorte à pouvoir pivoter autour d'un second axe de pivotement (538).

15. Dispositif de tri selon la revendication 14, **caractérisé en ce que** ledit second axe de pivotement (538) est situé en amont ou en aval des seconds éléments de guidage (539) associés.

16. Dispositif selon la revendication 14 ou 15, **caractérisé en ce que** ledit second axe de pivotement (538) est situé à l'extérieur de l'espace qui est limité par une ligne (653) qui est orientée perpendiculairement au rail de guidage amont (610) et qui s'étend en passant par un point de contact entre un second élément de guidage (539) et le rail de guidage amont (611) et une ligne qui est orientée perpendiculairement au rail de guidage aval et qui s'étend en passant par un point de contact entre l'autre second élément de guidage (539) et le rail de guidage aval (611) durant le passage de l'interruption (609) située entre le rail de guidage amont (610) et le rail de guidage aval (611) par l'ensemble de guidage (533) associé.
